# EUROPÄISCHE PATENTSCHRIFT

(11) **EP 1 201 297 B1**
(45) Veröffentlichungstag und Bekanntmachung des Hinweises auf die Patenterteilung: **29.12.2004**
(21) Anmeldenummer: 01124057.9
(22) Anmeldetag: 09.10.2001
(51) Int. Cl.: B01F 11/00, B01B 1/04

(54) **Schüttelgerät für Probengefässe**
Shaking apparatus for sample vessels
Agitateur pour recipients d'echantillonnage

(30) Priorität: 31.10.2000 DE 20018633 U
(43) Veröffentlichungstag der Anmeldung: 02.05.2002
(73) Patentinhaber: H+P Labortechnik AG, 85764 Oberschleissheim (DE)
(72) Erfinder: Herz, Helmut, Dr.-Ing., 85764 Oberschleissheim (DE); Kaufmann, Klaus, Dr.-Ing., 85764 Oberschleissheim (DE)
(74) Vertreter: Lang, Friedrich, Dipl.-Ing.

(56) Entgegenhaltungen:
- CH-A- 585 585
- DE-C- 935 029
- FR-A- 934 278
- FR-A- 980 886
- GB-A- 2 254 423
- US-A- 5 259 672

## Beschreibung

Die Erfindung betrifft Schüttelgeräte für Probengefäße, insbesondere Mikrotiterplatten, mit einer Gerätebasis, mit einem gegenüber dieser für Schwingbewegungen in einer Horizontalebene abgestützten Probengefäßträgertisch und mit einer zwischen der Gerätebasis und dem Probengefäßträgertisch wirksamen Antriebsanordnung zur Erzeugung der Schwingbewegungen des Probengefäßträgertisches.

Zum Erzielen eines von Probenbehältnis zu Probenbehältnis gleichen Behandlungsergebnisses ist es erforderlich, daß über die Oberfläche des Probengefäßträgertisches hin in einzelnen Probengefäßen befindliche Proben identische Schüttelbewegungen in einer Horizontalebene ausführen. Dies hat zur Voraussetzung, daß durch eine geeignete Abstützung des Probengefäßträgertisches gegenüber der Gerätebasis dafür Sorge getragen wird, daß der Probengefäßträgertisch nur translatorische Bewegungen ausführt.

Wird die Antriebsanordnung zwischen der Gerätebasis und dem Probengefäßträgertisch stillgesetzt, so müssen die Probengefäße zuverlässig in eine Stellung gelangen, die es Füllpipetten oder Füllnadeln bzw. Entnahmepipetten oder Entnahmenadeln gestattet, von automatischen Einrichtungen geführt zuverlässig die Mündungen der Probengefäße zu treffen. Bekannte Schüttelgeräte wurden mit einem Exzenterantrieb zwischen der Gerätebasis und dem Probengefäßträgertisch ausgestattet, wobei die Exzenterdrehzahl in Bereichen von einigen wenigen Umdrehungen je Minute bis zu mehreren hundert Umdrehungen je Minute einstellbar ist.

Die US-A-5 259 672 offenbart ein Schüttelgerät mit den Merkmalen des Oberbegriffes von Patentanspruch 1, wobei der Schütteltisch von zwei Paaren von um 90 Grad gegeneinander versetzten Solenoid-Antrieben in Bewegung gesetzt wird, deren Polkerne über Pleuel-Koppelelemente an dem Schütteltisch angreifen.

Das Ziel der Erfindung ist es, ein Schüttelgerät für Probengefäße der hier betrachteten, eingangs definierten allgemeinen Art so auszugestalten, daß die translatorischen Schüttelbewegungen des Probengefäßträgertisches in weiten Grenzen beliebig einstellbar sind, daß ferner ein rasches Stillsetzen der Schüttelbewegungen möglich ist, daß weiterhin der Probengefäßträgertisch in definierter Lage stillgesetzt und gehalten werden kann und daß schließlich die hier angegebenen Ziele mit einem vergleichsweise einfachen Aufbau erreicht werden.

Dies wird erfindungsgemäß durch ein Schüttelgerät mit den Merkmalen des Patentanspruchs 1 erreicht.

Bei dem hier angegebenen Schüttelgerät ist die Antriebsanordnung vollständig rotations-massenfrei gehalten, derart, daß nach Abschalten der Strombeaufschlagung der Erregerspulen nicht in rotierenden Teilen der Antriebsordnung abzubremsende Energie gespeichert bleibt. Der Probengefäßträgertisch kann daher reproduzierbar zeitlich sehr begrenzte und präzise dosierbare Schüttelbewegungen ausführen.

Vorteilhafte Ausgestaltungen und Weiterbildungen eines Schüttelgerätes für Probengefäße gemäß Anspruch 1 bilden Gegenstand der dem Anspruch 1 nachgeordneten Patentansprüche, deren Inhalt hierdurch ausdrücklich zum Bestandteil der Beschreibung gemacht wird, ohne an dieser Stelle den Wortlaut zu wiederholen.

Nachfolgend werden verschiedene Ausführungsbeispiele unter Bezugnahme auf die Zeichnungen näher erläutert. Es zeigen:
- Fig. 1: eine schematische, perspektivische Ansicht eines Schüttelgerätes der hier angegebenen Art;
- Fig. 2: eine vereinfachte perspektivische Darstellung eines Schüttelgerätes in einer gegenüber Fig. 1 abgewandelten Form unter nur andeutungsweiser Wiedergabe der Antriebsanordnung und Darstellung einer besonderen Art der Abstützung des Probengefäßträgertisches;
- Fig. 3: eine ausschnittsweise Aufsicht auf eine zweckmäßige Ausführungsform eines Schüttelgerätes der hier angegebenen Art;
- Fig. 4: einen Schnitt durch das Schüttelgerät gemäß Fig. 3 entsprechend der in Fig. 3 angegebenen Schnittlinie IV- IV;
- Fig. 5: einen Teilschnitt durch das Schüttelgerät gemäß Fig. 3 entsprechend der in Fig. 3 angedeuteten Linie V-V;
- Fig. 6: eine Untersicht des Probengefäßträgertisches des Schüttelgerätes nach den Fig. 3 bis 5;
- Fig. 7: eine vereinfachte perspektivische Darstellung eines Schüttelgerätes der hier angegebenen Art mit einer Mehrfachanordnung von auf einer gemeinsamen Gerätebasis betriebenen Probengefäßträgertischen;
- Fig. 8: eine schematische perspektivische Darstellung einer abgewandelten Ausführungsform eines Schüttelgerätes mit einem rahmenartigen Probengefäßträgertisch und einer Mehrfachanordnung von diesen abstützenden Gerätebasiseinheiten;
- Fig. 9: eine vereinfachte Vertikalschnittsansicht eines Teiles einer wiederum abgewandelten Form eines Schüttelgerätes;
- Fig. 10a bis10d: perspektivische Ansichten von Probengefäßen, Probengefäßanordnungen bzw. Mikrotiterplatten, die mit Schüttelgeräten der hier angegebenen Art einer Schüttelbehandlung unterzogen werden können;
- Fig. 11: einen Teilschnitt durch ein Schüttelgerät der hier angegebenen Art mit einer gegenüber der Ausführungsform nach Fig. 5 abgewandelten Form der Abstützmittel zwischen dem Probengefäßträgertisch und der Gerätebasis;
- Fig. 12: einen Teilschnitt durch eine Ausführungsform eines Schüttelgerätes der vorliegend angegebenen Art zur Erläuterung einer Ausbildung der Mittel zur Fixierung der Ruhestellung des Probengefäßträgertisches gegenüber der Gerätebasis;
- Fig. 13: eine perspektivische Teilansicht eines gegenüber der Ausführungsform nach den Fig. 3 und 4 abgewandelten Haltewinkels zur Fixierung von Probengefäßträgerplatten auf dem Probengefäßträgertisch;
- Fig. 13a und 13b: perspektivische bzw. teilweise im Schnitt gezeichnete Ansichten zur Erläuterung des Aufbaus und der Wirkungsweise eines Haltewinkels gemäß Fig. 13;
- Fig. 14: eine perspektivische, teilweise schematisch und teilweise in auseinandergenommenen Zustand gezeichnete Abbildung einer Antriebsanordnung in bestimmter Abwandlung gegenüber der Ausführungsform gemäß Fig. 4;
- Fig. 15: eine teilweise im Schnitt gezeichnete, ausschnittsweise Seitenansicht des gegenüber der Gerätebasis abgestützten Probengefäßträgertisches und der Antriebsanordnung mit Mitteln zur Vorspannung des Probengefäßträgertisches gegenüber der Gerätebasis nach abwärts;
- Fig. 16: eine schematische, perspektivische und ausschnittsweise Ansicht eines Schüttelgerätes der hier angegebenen Art mit einer Antriebsanordnung, bei der die Spulen an dem Probengefäßträgertisch und die Polkernanordnungen an der Gerätebasis befestigt sind;
- Fig. 17: eine ausschnittsweise schematische Seitenansicht einer Antriebseinheit der Antriebsanordnung nach Fig. 16 zur Verdeutlichung der Energiezuleitung zu den Spulensystemen; und
- Fig. 18: eine perspektivische Ansicht einer nochmals anderen Ausführungsform eines Schüttelgerätes der vorliegend angegebenen Art.

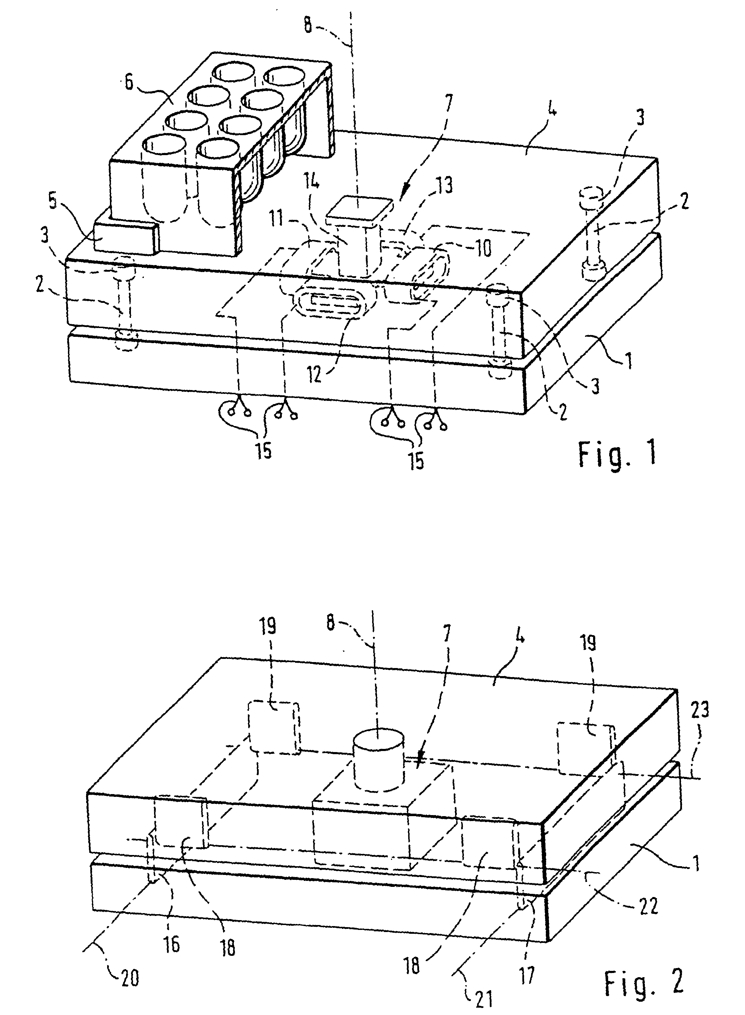

Das Schüttelgerät nach Fig. 1 enthält eine Gerätebasis 1, welche vergleichsweise geringe Bauhöhe aufweist. In der Gerätebasis 1 sind die unteren Enden von Stützfederstiften 2 verankert. Die oberen Enden der Stützfederstifte 2 reichen in Stützpfannen 3 eines Probengefäßträgertisches 4 hinein, wobei sich die Stützpfannen 3 von der Unterseite des Probengefäßträgertisches 4 nach abwärts öffnen. Die Oberfläche des Probengefäßträgertisches 4 ist jeweils im Eckenbereich mit Haltewinkeln 5 versehen, wobei in Fig. 1 nur einer dieser Haltewinkel gezeigt ist. Zwischen die Haltewinkel kann eine Mikrotiterplatte 6 auf den Probengefäßträgertisch gesetzt werden. Gemäß hier nicht gezeigten Ausführungsformen kann jedoch der Probengefäßträgertisch 4 auch mit Halterungen für einzelne Probengefäße versehen sein, in denen einer Schüttelbehandlung zu unterziehende Proben enthalten sind.

Zwischen der Gerätebasis 1 und dem Probengefäßträgertisch 4 ist eine Antriebsanordnung 7 vorgesehen, die gemäß einem sehr wichtigen Merkmal keine rotierenden Teile besitzt.

An der Gerätebasis 4 sind zwei um 90° um eine vertikale Mittelachse 8 versetzte, einander gegenüberliegende, mit ihren Spulenöffnungen in Horizontalrichtung fluchtende Erregerspulen 10 und 11 bzw. 12 und 13 befestigt, deren Spulenöffnungsquerschnitte im wesentlichen flach rechteckig sind, wobei die Spulenöffnungen in einer gemeinsamen horizontalen Mittelebene gelegen sind. An einem von dem Probengefäßträgertisch 4 von dessen Unterseite im wesentlichen längs der genannte vertikalen Mittelachse 8 nach abwärts reichenden Anker 14 ist ein kreuzförmiges Polkernstück befestigt, dessen Polkemschenkel in die Spulenöffnungen der Erregerspulen 10 und 11 bzw. 12 und 13 hineinragen, wobei die Polkernschenkel des kreuzförmigen Polkernstückes in Vertilkalrichtung geringes Spiel gegenüber der jeweils gegenüberliegenden oberen und unteren Spulenöffnungswand haben, jedoch ein beträchtliches Spiel zu den jeweils benachbarten seitlichen Spulenöffnungsinnenwänden besitzen, nämlich ein Spiel der Größenordnung des Bewegungsweges der jeweiligen Polkernschenkel in den zugehörigen Erregerspulen in Richtung der Spulenachse. Aufgrund der Längenbemessung der federnden Stützstifte 2 haben die Gerätebasis 1 und der Probengefäßträgertisch 4 bei translatorischen Schüttelbewegungen des Probengefäßträgertisches 4 zweckmäßig solchen Abstand, daß das obere und untere Spiel zwischen dem kreuzförmigen Polkernstück, welches über den Anker 14 fest mit dem Probengefäßträgertisch 4 verbunden ist, gegenüber dem horizontalen Spulenöffnungsinnenwänden aufrecht erhalten bleibt.

Die Erregerspulen 10, 11,12 und 13 sind über in Fig. 1 schematisch angegebene Stromzuführungsleitungen 15 an ein Steuergerät angeschlossen, mittels welchem die Erregerspulen 10 bis 13 mit solchen Strömen relativ zueinander einstellbarer Phase und Frequenz sowie gegebenenfalls auch einstellbarer Amplitude beaufschlagbar sind, daß das kreuzförmige Polkemstück in den Spulkernöffnungen der Erregerspulen 10 bis 13 und damit auch der Probengefäßträgertisch 4 auf den Stützfederstiften 2 kreisförmige oder elliptische oder in beliebiger Richtung hin- und her gehende translatorische Bewegungen in einer Horizontalebene ausführt.

Bei der Ausführungsform nach Fig. 2 ist anstelle der Abstützung des Probengefäßträgertisches 4 gegenüber der Gerätebasis 1 mittels Stützfederstiften 2 eine Abstützung mittels zweier Gelenkplattenpaare oder Blattfederpaare 16 und 17 sowie 18 und 19 vorgesehen. Das Gelenkplattenpaar oder Blattfederpaar 16 und 17 ist längs der mit 20 und 21 bezeichneten Linien mit der Innenseite der Gerätebasis 1 schwenkbar verbunden oder, wenn es sich um Blattfederelemente handelt, längs dieser Linien mit der Gerätebasis 1 fest verbunden. Die freien Enden der Gelenkplatten oder Blattfedern 16 und 17 sind über eine Kuppelachse 22 und eine Kuppelachse 23 miteinander gekuppelt, wobei die Kuppelachsen 22 und 23 windschief und im rechten Winkel zu den Linien bzw. Achsen 20 und 21 verlaufen. An den Kuppelachsen 22 und 23 greifen jeweils die Gelenkplatten bzw. Blattfedern 18 und 19 an, welche mit ihren oberen Enden wiederum an der Innenseite des Probengefäßträgertisches 4 angelenkt bzw. verankert sind. Die Ausführungsform nach Fig. 2 stellt sicher, daß sich der Probengefäßträgertisch 4 auch bei ungleichförmiger Gruppierung von Massen auf seiner Oberfläche relativ zu der Mittellängsachse 8 präzise nur translatorisch bewegt.

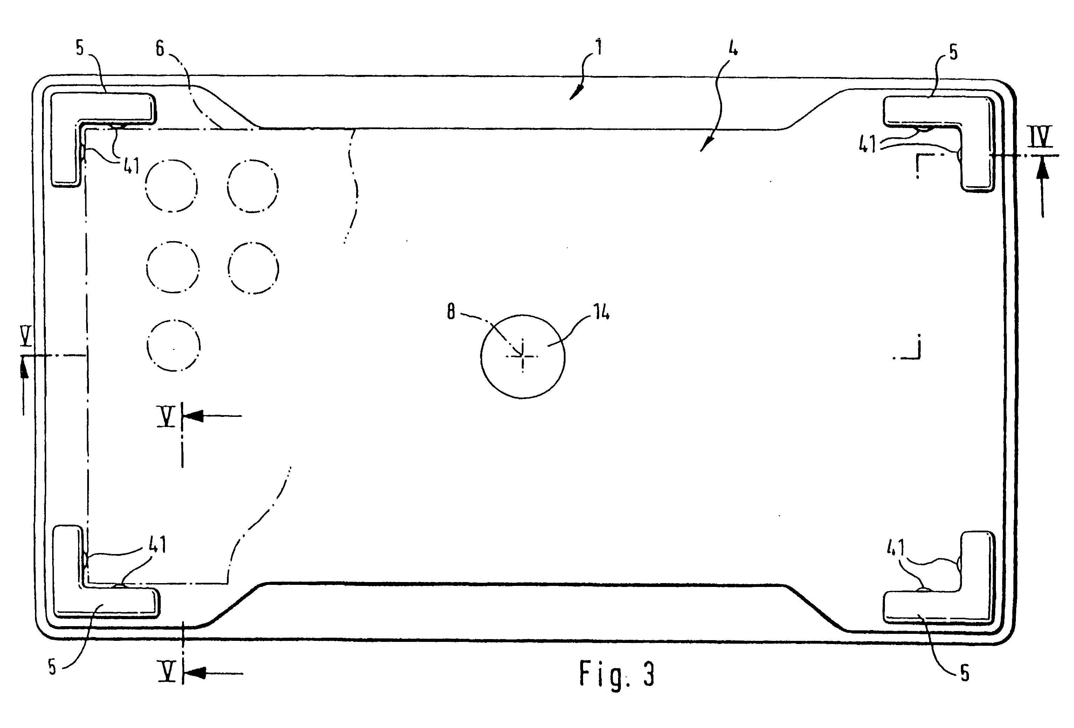

Bei der Ausführungsform nach den Fig. 3 bis 6 hat der Probengefäßträgertisch 4 im wesentlichen die Gestalt einer dünnen Platte mit darauf festgeschraubten Haltewinkeln 5 und mit einem schmalen, nach abwärts reichenden Rand 25 sowie von einer Verankerungsbohrung 26 zum Rand 25 hin verlaufenden unteren Verstärkungsstegen 27. Außerdem befinden sich auf der Unterseite des Probengefäßträgertisches 4 auch Stützpfannen 28 zur Aufnahme von den oberen Enden 29 von Stützstiften 30, welche in sich nach aufwärts öffnenden Bohrungen 31 der Gerätebasis aufwärts ragen und deren mit einem Kopfende versehene untere Enden von einer Befestigungsscheibe 32 und einer eingespannten Zwischenlage 33 in der Bohrung der Gerätebasis festgehalten werden.

Schließlich öffnen sich von der Unterseite des Probengefäßträgertisches 4 nach abwärts zylindrische Anschlagkammem 34, welche bei auf die Gerätebasis 1 aufgesetztem Probengefäßträgertisch 4 über mittels Stiften 35 im randnahen Gerätebasisbereich gelagerte Anschlagrollen 36 gestülpt sind, wobei der Durchmesser der Anschlagrollen 36 um den maximalen Arbeitshub des Probengefäßträgertisches 4 gegenüber der Gerätebasis 1 kleiner als der Innendurchmesser der zylindrischen Anschlagkammern 34 ist. Es sei erwähnt, daß die Anschlagrollen 36 einen dämpfenden Ring aus elastischem Material tragen.

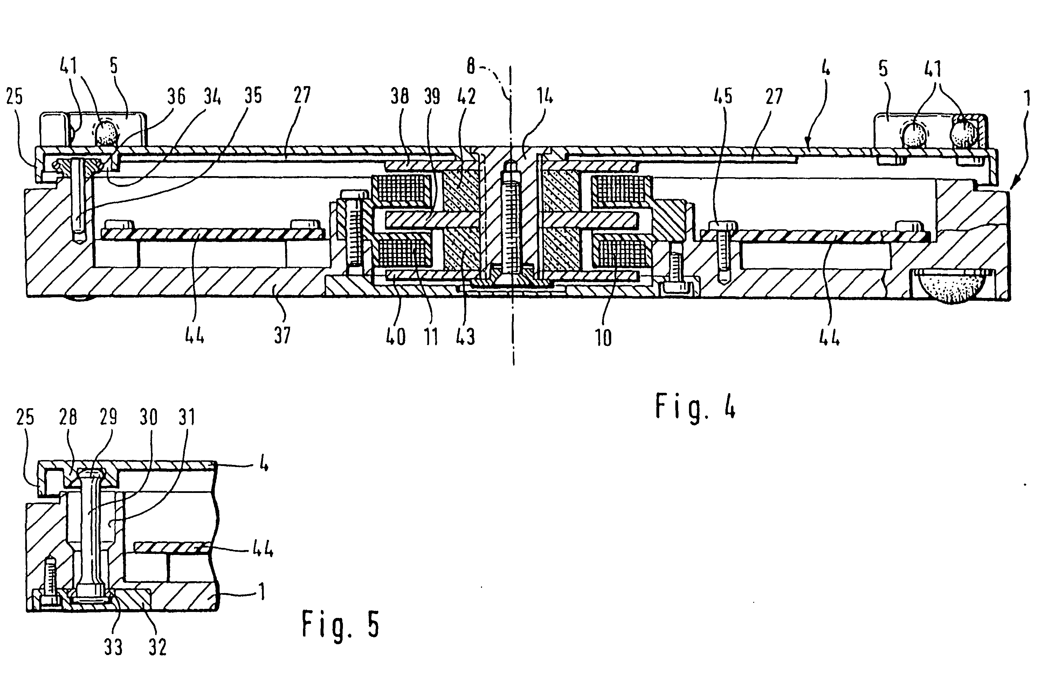

Aus Fig. 4 sind Einzelheiten einer Ausführungsform der Antriebsanordnung 7 erkennbar. Rund um einen Durchbruch in einem Boden 37 des flach schalenförmigen Gehäuses der Gerätebasis sind mit ihren Spulenöffnungen aufeinander zuweisend und jeweils fluchtend um 90 Grad um die vertikale Mittelachse 8 versetzt zwei Paare von Erregerspulen befestigt, von denen in Fig. 4 nur das Erregerspulenpaar 10 und 11 im Schnitt gezeichnet dargestellt ist. An dem fest mit dem Probengefäßträgertisch 4 verbundenen Anker 14 sind insgesamt drei kreuzförmige Polkemstücke 38, 39 und 40 befestigt, von denen das obere Polkemstück 38 mit seinen Polschenkeln über den Oberseiten der Spulen der Erregerspulenpaare liegt und einen gewissen Spielraum hierzu einhält, von denen ferner das mittlere Polkernstück 39 mit seinen Polkernschenkeln in die Spulenöffnungen der Erregerspulenpaare hineinreicht und nach oben sowie nach unten ein Spiel zu den Spulenöffnungsinnenwänden einhält, und von denen schließlich das Polkernstück 40 mit seinen Polkernschenkeln unter den Unterseiten der Erregerspulenpaare gelegen ist und einen Zwischenraum hierzu einhält.

Wie zuvor schon bei der Erläuterung von Fig. 1 ausgeführt haben auch die Spulenöffnungen der Erregerspulenpaare der Ausführungsform nach den Figuren 3 bis 6 flach rechteckigen Spulenöffnungsquerschnitt. Das Spiel zwischen einem Polkernschenkel des Polkemstückes 39 zu den seitlichen Wänden der zugehörigen Spulenöffnung ist entsprechend dem maximalen Arbeitshub des Probengefäßträgertisches 4 gegenüber der Gerätebasis 1 bemessen.

Aus Fig. 4 ist weiterhin ersichtlich, daß die Haltewinkel 5 im Eckenbereich des Probengefäßträgertisches 4 von unten an diesen hingeschraubt und mit Ausnehmungen versehen sind, in welche elastische Kugelkörper 41 eingesetzt sind, deren über die Innenflächen der Haltewinkel 5 hinausstehende Bereiche dazu dienen, einen unteren Rand einer Mikrotiterplatte 6 zu erfassen und festzuhalten um so die Mikrotiterplatte auf dem Probengefäßträgertisch 4 zu fixieren.

Bei der Ausführungsform nach Fig. 4 sind zwischen die kreuzförmigen Polkernstücke 38, 39 und 40 den Anker 14 umfassende Magnetringe 42 und 43 eingesetzt. Diese Magnetringe sind so magnetisiert, daß eine Ringfläche ein Nordpol und die gegenüberliegende Ringfläche ein Südpol ist. Die Permanentmagnetringe 42 und 43 werden unter Zwischenlage des kreuzförmigen Polkernstückes 39 so auf den Anker 14 gesetzt, daß einander benachbarte Ringflächen der Permanentmagnetringe 42 und 43 gleiche magnetische Polung aufweisen.

Innerhalb des flachen schalenförmigen Gehäuses der Gerätebasis 1 können ferner Schaltungträgerplatten 44 beispielsweise mittels Schrauben 45 auf entsprechenden Gehäuseabsätzen montiert sein.

Die gesamte Gerätebasis 1 kann derart mit Kunststoff vergossen sein, daß sie gegenüber Flüssigkeiten und gegenüber Vakuum resistent ist. Die Kunststoffummantelung bzw. der Kunststoffverguß umfaßt auch die gesamte Erregerspulenanordnung. Durch teilbare Ausbildung der Anordnung der Polkemstücke derart, daß sie nachträglich in die Erregerspulenanordnung eingeschoben werden können, erreicht man auch bei starrem Kunststoffverguß der Erregerspulenanordnung in der Gerätebasis 1 eine gute Montierbarkeit. Die Polkernstücke, die zwischengelegten Ringmagnete und der Anker 14 sowie auch die Unterseite des Probengefäßträgertisches 4 können aus flüssigkeitsresistentem und chemisch resistentem Werkstoff gefertigt sein.

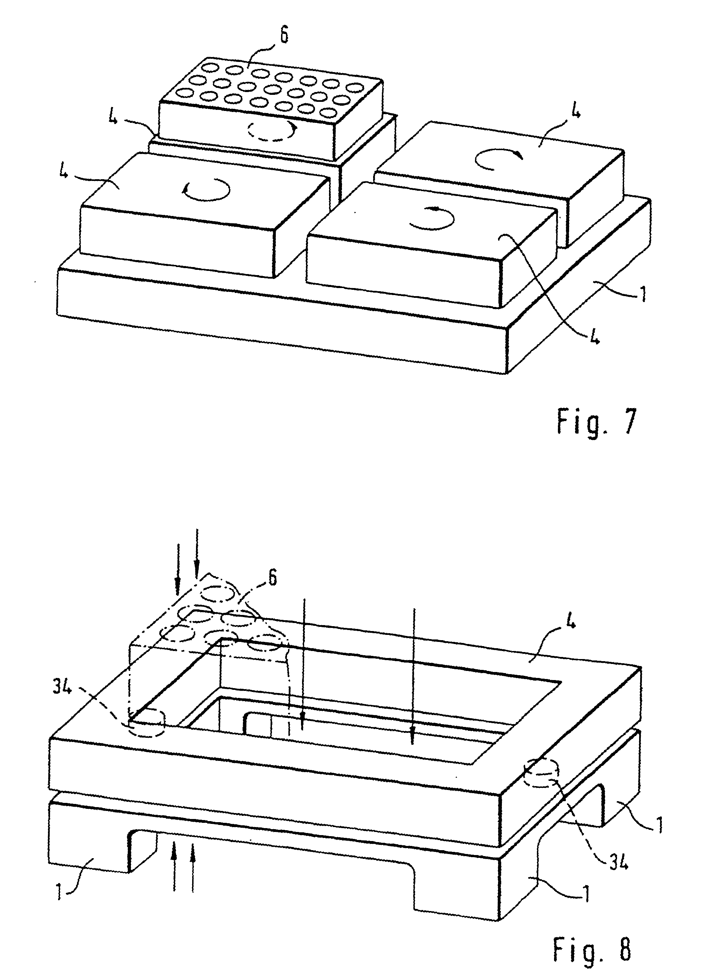

Fig. 7 zeigt ein Schüttelgerät der folgend angegebenen Art, bei der auf einer gemeinsamen Gerätebasis 1, welche aber vier Antriebsanordnungen 7 enthält, vier Probengefäßträgertische 4, beispielsweise nach den Fig. 1 oder 4, betrieben werden. Durch Ansteuerung der Erregerspulenpaare 10 bis 13 der einzelnen Antriebsanordnungen 7 in der Weise, daß einander diagonal gegenüberliegende Probengefäßträgertische 4 gleichsinnige Schüttelbewegungen ausführen, einander benachbarte Probengefäßträgertische 4 jedoch gegensinnige Schüttelbewegungen ausführen, wird erreicht, daß die Gesamtanordnung dann, wenn die Probengefäßträgertische 4 etwa gleiche Belastungen tragen, ausgewuchtete ist.

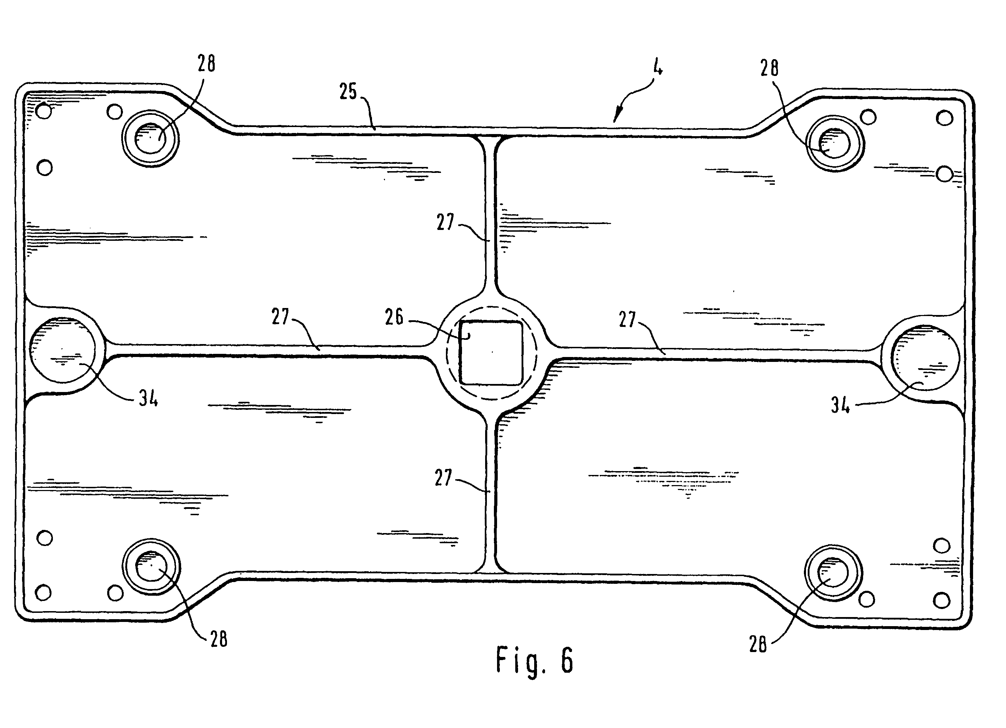

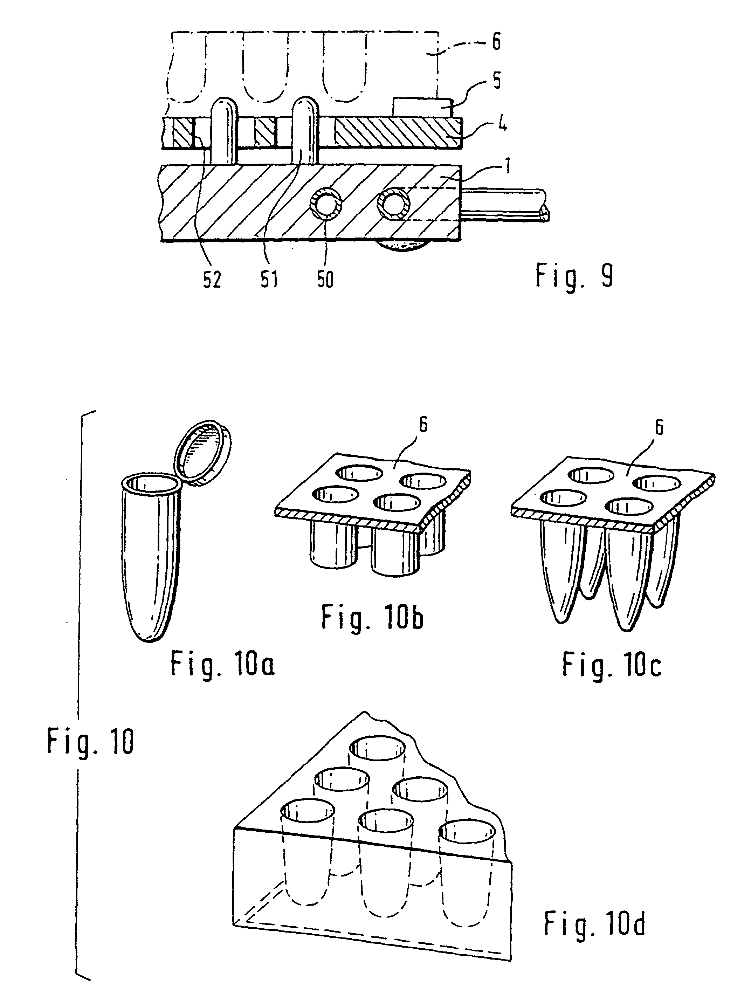

Bei der Ausführungsform nach Fig. 8 wirkt eine Anordnung von 4 Gerätebasiseinheiten 1 mit einem rahmenförmigen Probengefäßträgertisch 4 zusammen. Mindestens an zwei Rahmenecken ragt von dem Probengefäßträgertisch 4 ein Anker 14 mit daran befestigten, kreuzförmigen Polkernstücken in eine Gerätebasiseinheit 1 nach abwärts und in der betreffenden Gerätebasiseinheit 1 ist eine Anordnung von zwei gekreuzten Erregerspulenpaaren befestigt, wie dies im Zusammenhang mit den Figuren 1 und 3 beschrieben wurde. An möglichst weit von einander entfernten Punkten des rahmenförmigen Probengefäßtisches 4 und von Verbindungsbrücken der Gerätebasiseinheiten 1 befinden sich ferner den maximalen Arbeitshub beschränkende Anschlagkonstruktionen mit sich nach abwärts öffnenden zylindrischen Anschlagkammern und in diese aufragenden Anschlagrollen zur Begrenzung des maximalen Arbeitshubes nach Art der in Verbindung mit den Figuren 4 und 6 beschriebenen Teile 34-36. Die rahmenartige Ausbildung des Probengefäßträgertisches 4 der Ausführungsform nach Fig. 8 hat den Vorteil, daß, wie in Fig. 8 durch Pfeile angedeutet, der von den einzelnen Behältnissen der Mikrotiterplatte 6 eingenommene Bereich in vertikaler Richtung nicht durch Teile des Schüttelgerätes verlegt ist, sondern für optische Durchlichtverfahren oder Magnetfeldabscheidung freigehalten ist. Es sei angemerkt, daß in den Zeichnungen die Probengefäßanordnungen oder die Mikrotiterplatten selbstverständlich nicht maßstabsgerecht gezeichnet sind. Die Probengefäßanordnungen können vielerlei Gestalt haben, worauf weiter unten noch im Zusammenhang mit Fig. 10 eingegangen wird. Auch kann über den Durchbruch des rahmenförmigen Probengefäßträgertisches 4 eine Plattform mit einer größeren Anzahl von Mikrotiterplattten gesetzt werden.

Soll eine Anordnung von Probegefäßen oder eine Mikrotiterplatte 6 zur Wärmebehandlung oder zur Kühlung der Proben erwärmt oder gekühlt werden, so kann gemäß Fig. 9 der Gehäuseteil der Gerätebasis 1 mit Heizmittelkanälen oder Kühlmittelkanälen 50 versehen werden. Die Gerätebasis 1 gibt durch Strahlung und Konvektion Wärme an den Probengefäßträgertisch 4 ab. Von diesem gelangt Wärme durch Konvektion und Strahlung an die einzelnen Probenbehältnisse der Mikrotiterplatte 6. Zur Verbesserung der Wärmeübertragung zwischen der Gerätebasis 1 und dem Probengefäßträgertisch 4 und von diesem zur Mikrotiterplatte 6 hin ragen von der Gerätebasis 1 Stifte aus gut wärmeleitendem Material, die als Wärmetausch- und Konvektionsförderstifte 51 zu bezeichnen sind, über Durchbrüche 52 des Probengefäßträgertisches4 bis in die Zwischenräume zwischen den Behältnissen der Mikrotiterplatte 6. Die Stifte 51 bewirken eine Verbesserung der gesamten Wärmeübertragung zwischen der beheizten bzw. der gekühlten Gerätebasis 1 und der Mikrotiterplatte 6. Im übrigen kann die Ausführungsform nach Fig. 9 bezüglich der Ausbildung der Gerätebasis 1 und des Probengefäßträgertisches 4 die Merkmale aufweisen, die zuvor im Zusammenhang mit den Figuren 1-8 beschrieben wurden.

Verschiedene Formen von Probengefäßen sind in Fig. 10 gezeigt. Ein einzelnes Probengefäß gemäß Fig. 10a ist in ein an dem Probengefäßträgertisch 4 zu verankerndes Stativ oder einen Einzelprobenhalter einzusetzen.

Fig. 10b zeigt einen Eckenausschnitt einer Mikrotiterplatte 6 mit etwa zylinderförmigen Probenbehältnissen. Fig. 10c zeigt einen Eckenausschnitt einer Mikrotiterplatte 6 mit umgekehrt zuckerhutförmigen Behältnissen für die Proben. Fig. 10d zeig einen Eckenausschnitt einer Mikrotiterplatte mit einem umrahmenden Gehäuse, welches insbesondere für die Verwendung in Verbindung mit Haltewinkeln 5 auf der Oberfläche des Probengefäßträgertisches 4 zweckmäßig ist. Einzelheiten der Verankerung der Probengefäße oder der Mikrotiterplatten an dem Probengefäßträgertisch 4 spielen jedoch hier für die wesentlichen Eigenschaften des vorliegend angegebenen Schüttelgerätes keine Rolle und werden vom Fachmann im Bedarfsfalle ausgestaltet.

Bedeutsam ist jedenfalls, daß der Probengefäßträgertisch 4 gegenüber der Gerätebasis 1 bei Abschalten der Strombeaufschlagung der Erregerspulenanordnungen sich unter Kraftwirkung von Federmitteln, beispielsweise der federnd ausgebildeten Stützstifte 30, in einer Neutralstellung ausrichtet oder aber durch eine konstant gehaltene Strombeaufschlagung bestimmter Erregerspulen der Erregerspulenanordnungen eine Neutralstellung zwangsweise aufsucht, die sicherstellt, daß roboterbetätigte Füllnadeln oder Füllpipetten oder Entnahmenadeln oder Entnahmepipetten jeweils die Behältnismündungen der Probengefäße treffen. Da die Antriebsanordnung keine rotierenden Maschinenteile enthält, können Schüttelprogramme präzise durch von entsprechenden Programmen festgelegte Strombeaufschlagung der Erregerspulen verwirklicht werden.

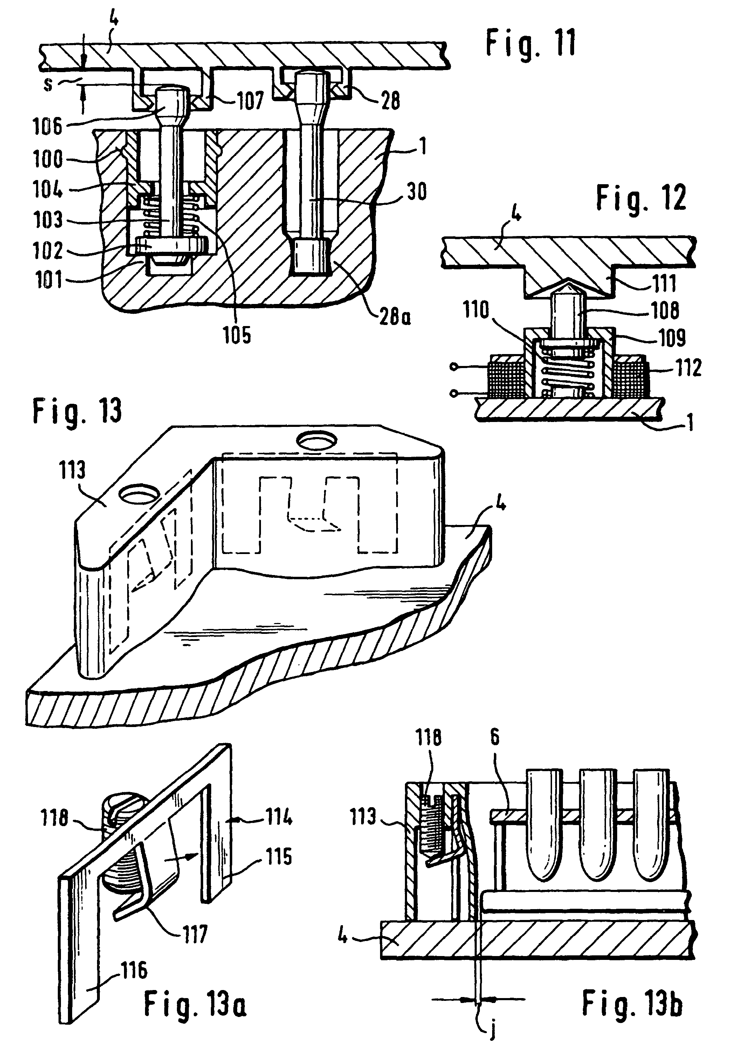

Im folgenden seien einige sehr zweckmäßige Abwandlungen und Weiterbildungen eines Schüttelgerätes der hier angegebenen Art im einzelnen anhand der Fig. 11 bis 18 behandelt.

Während bei den zuvor beschriebenen Ausführungsformen gemäß Fig. 5 eine fedemde und den Probengefäßträgertisch 4 nach Ausschalten der Antriebsanordnung 7 selbsttätig in eine definierte Ruhestellung zurückführende Abstützung des Probengefäßträgertisches 4 gegenüber der Gerätebasis 1 dadurch vorgesehen war, daß auf der Unterseite des Probengefäßträgertisches mehrere Stützpfannen zur Aufnahme der oberen Enden von Stützstiften gebildet waren, welche in sich nach aufwärts öffnenden Bohrungen der Gerätebasis aufragten und deren mit einem Kopfende versehene untere Enden mittels einer Befestigungsscheibe von unten gegen eine eingespannte federnde Zwischenlage in einer Bohrung der Gerätebasis festgehalten wurden, so daß die Stützstifte und die Stützpfannen sowohl die Mittel zur Abstützung als auch zur federnden Rückführung des Probengefäßträgertisches 4 nach Ausschalten der Antriebsanordnung in die definierte Ruhelage bildeten, sind gemäß der Ausführungsform nach Fig. 11 gesonderte Abstützmittel und Zentrierungsmittel zur Rückführung in die Ruhelage vorgesehen. Demgemäß sind die Kopfenden der Stützstifte 30 so profiliert, daß sie beim Abwälzen in den zugehörigen Stützpfannen 28 auf der Seite des Probengefäßträgertisches 4 und 28a auf der Seite der Gerätebasis 1 eine gleichbleibende Abstützhöhe des Probengefäßträgertisches 4 sicherstellen.

Jeweils neben einem Satz von Stützstiften 30 und Stützpfannen 28 sowie 28a befindet sich in der Gerätebasis 1 eine Senkbohrung mit einer Hinterschneidung 100 und einem unteren Schulterabsatz 101. Ein Tellerflansch 102 stützt sich gegen den Schulterabsatz 101 ringsum ab. Der Tellerflansch 102 befindet sich am unteren Ende eines Zentrierstiftes 103. Eine Federlagerbüchse 104 ist in die Senkbohrung eingesetzt und in die Hinterschneidung 100 eingerastet. Zwischen der Federlagerbüchse 104 und dem Tellerflansch 102 ist eine den Zentrierstift 103 umschlingende Schraubendruckfeder 105 eingespannt, derart, daß der Tellerflansch 102 ständig gegen den Schulterabsatz 101 gedrückt wird.

Einen Zentrierstiftkopf 106, welcher über die Gerätebasis 1 aufragt, umfaßt mit geringem radialem Spiel, jedoch mit etwas größerem axialen Spiel s eine sich abwärts öffnende Zentrierpfanne 107, welche auf der Unterseite des Probengefäßträgertisches 4 ausgebildet ist. Die in Figur 11 gezeigte Anordnung ergibt eine sehr zuverlässige Zentrierung bzw. Rückführung des Probengefäßträgertisches 4 nach Ausschalten der Antriebsanordnung 7 jeweils unabhängig von den Abstützverhältnissen durch die Stützstifte 30 in Zusammenwirkung mit den Stützpfannen 28 und 28a.

Gemäß der in Figur 12 gezeigten Abwandlung können, gesondert von den Probengefäßträgertisch 4 gegenüber der Gerätebasis 1 abstützenden, sich zwischen Stützpfannen erstreckenden Stützstiften jeweils im Eckenbereich des Probengefäßträgertisches, in zwei möglichst weit in einer Horizontalebene auseinanderliegenden Bereichen des Probengefäßträgertisches und der Gerätebasis 1 aufragend, mehrere Zentrierkegelstifte 108 vorgesehen sein, welche von in ein Federgehäuse 109 eingesetzten Schrauben Druckfedern in Richtung nach aufwärts in Kegelausnehmungen von Kegelpfannen 111 auf der Unterseite des Probengefäßträgertisches 4 gedrückt werden, jedoch von beispielsweise das Federgehäuse 109 umschlingenden Solenoidspulen 112 gleichzeitig mit der Einschaltung der Antriebsanordnung gegen die Kräfte der Schraubenfedern 110 aus den Kegelausnehmungen zurückgezogen werden. Selbstverständlich sind die Zentrierkegelstifte 108 beispielsweise aus ferromagnetischem Werkstoff gefertigt und in einem etwa aus Kunststoff gefertigten Federgehäuse 109 geführt. Diesbezügliche Einzelheiten sind jedoch in einer dem Fachmann geläufigen Weise im einzelnen vorzusehen.

Den Haltewinkeln 5 der Ausführungsform nach Fig. 4 entsprechende Haltewinkel gemäß einer sehr vorteilhaften Abwandlung in der Ausführungsform nach Fig. 13 sind hier mit 113 bezeichnet. Sie sind jeweils an mindestens zwei einander diagonal gegenüberliegenden Ecken des Probengefäßträgertisches 4 vorgesehen und sind beispielsweise mittels Schrauben in einer in der Zeichnung nicht im einzelnen dargestellten Art und Weise von unten an den Probengefäßträgertisch 4 befestigt. Hierzu können an der Unterseite der Haltewinkel 113 in geeigneter Weise Befestigungsaugen angeformt sein. Bedeutsam ist jedoch, daß die Haltewinkel 113 bei der Ausführungsform gemäß Fig. 13 aus einem zähelastischen Werkstoff, beispielsweise aus einem zähelastischen Kunststoff gefertigt sind und derart hohl ausgebildet sind, daß in den Winkelschenkeln ein Betätigungsmechanismus eingesetzt werden kann, dessen Gestalt und Wirkungsweise aus den Figuren 13 a und 13 b ersichtlich ist. Der Betätigungsmechanismus enthält einen Betätigungsbügel 114 mit zwei seitlichen Stützschenkeln 115 und 116 und einem mittleren, mit dem freien Ende nach einwärts gebogenen Betätigungsschenkel 117. Justier-Maden-Schrauben 118, die von oben in die Haltewinkelschenkel eingeschraubt sind, drücken mit ihren unteren Enden gegen den einwärts gebogenen Bereich der Betätigungsschenkel 117 der Betätigungsbügel 114 und bewirken, daß der Betätigungsschenkel 117 mit zunehmendem Niederschrauben der Justierschraube 118 die Innenflanke jedes Haltewinkelschenkels elastisch nach einwärts ausbeult. Wie aus Fig. 13b ersichtlich, kann auf diese Weise das Spiel j zwischen einem Rand eines Probengefäßträgers oder einer Mikrotiterplatte 6 und jeder Innenflanke eines Haltewinkels 113 beliebig justiert werden. Diese Justage kann entweder ein geringes Spiel j gemäß Fig. 13b vorsehen oder auch eine Spielfreiheit verwirklichen, derart, daß der Rand der Mikrotiterplatte 6 in einstellbarem Maße federn gehalten ist. Weiter kann die Justierung mittels der Justierschrauben 118 bewirken, daß eine Längsachse der Mikrotiterplatte 6 in einer bestimmten Winkelstellung oder einer 90°-Stellung relativ zum Probengefäßträgertisch 4 ausgerichtet wird, um gleichzeitig eine genaue Ausrichtung mit Bezug auf Robotereinrichtungen zu erreichen, die mit den Mündungen der Probengefäße zusammenwirken.

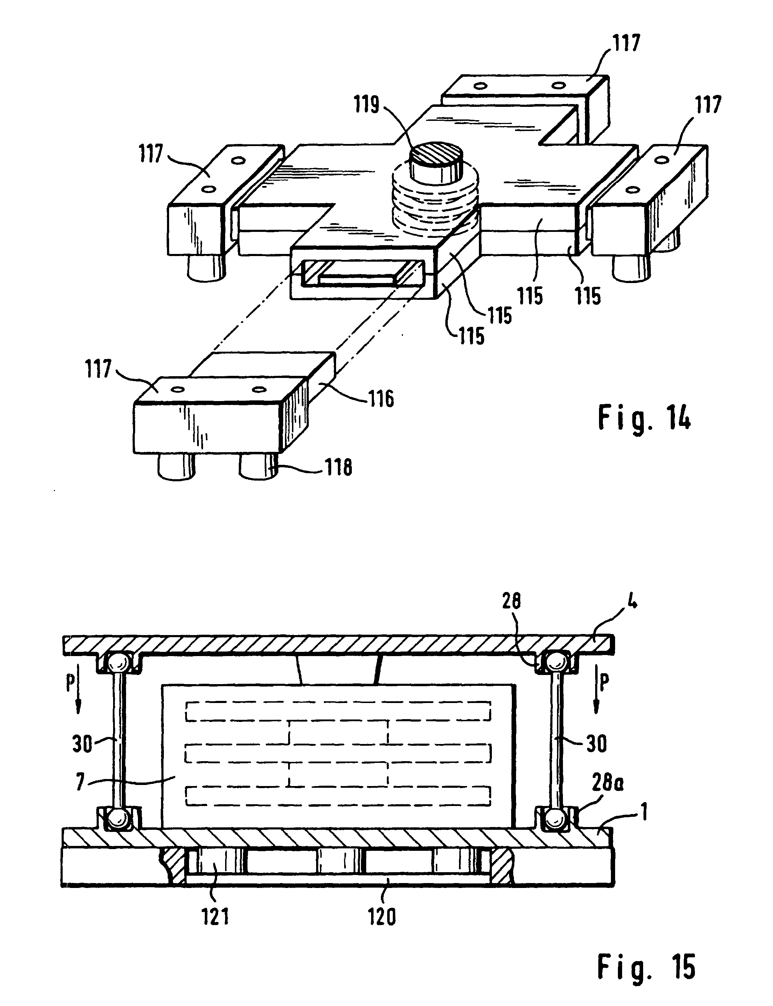

Die Ausführungsform nach Fig. 14 unterscheidet sich von derjenigen nach Fig. 4 in erster Linie dadurch, daß die oberen und unteren Polkernstücke 38 und 40, welche auch als Jochbleche zu bezeichnen sind, bei der Ausführungsform nach Fig. 14 aufeinander zu verlaufende Rückschlußteile aufweisen, die mindestens einen bestimmten Bereich der Spulenabmessung parellel zur Spulenachse einnehmen. Bei der Ausführungsform nach Fig. 14 erstrecken sich die Rückschlußteile 115 über die gesamte wirksame Länge der Spulen, die in Fig. 14 mit 116 bezeichnet sind. In der Darstellung von Fig. 14 ist die dem Betrachter zugekehrte Spule 116 aus dem Raum zwischen dem mittleren Polkern und den umschließenden Jochblechen und Rückschlußteilen herausgezogen dargestellt. Die Spulen 116 sind jeweils an Verankerungssockel 117 angesetzt, die über Befestigungsaugen 118 jeweils an der Gerätebasis 1 befestigt sind. Der in Fig. 14 mit 119 bezeichnete und abgeschnitten dargestellte Anker stellt die feste Verbindung von dem mittleren, kreuzförmigen Polkernstück, den oben und unten an dieses angesetzten Permanentmagnetringen und den oberen und unteren Jochblechen sowie Rückschlußteilen 115 zu dem Probengefäßträgertisch her. Die Anordnung der Rückschlußteile 115 hat den Vorteil, daß für die Kraftentwicklung der einzelnen Einheiten der Antriebsanordnung nicht nur die horizontal verlaufenden Windungsteile, sondern auch die vertikal verlaufenden Windungsteile der Spulen 111 ausgenutzt werden können.

Es sei hier ausdrücklich betont, daß gemäß einer sehr vorteilhaften und in manchen Fällen zu bevorzugenden Abwandlung gegenüber der Anordnung nach Fig. 14 die Spulen 116 über die Befestigungssockel 117 und nach aufwärts ragende Befestigungsaugen an dem Probengefäßträgertisch 6 zu befestigen sind, während die ferromagnetischen Teile, nämlich die Permanentmagneten, das Polkernstück und die Jochbleche, welche größere Masse haben, an der Gerätebasis befestigt werden. Die geringere Masse des Spulensystems bedingt eine insgesamt geringere Masse der mit dem Probengefäßträgertisch gekoppelten Massen und damit die Möglichkeit der Verwirklichung größerer Frequenzen der Rüttelbewegungen.

Fig. 15 zeigt wiederum schematisch den mittels Stützstiften 30 und zusammenwirkenden Stützpfannen 28 auf der Seite des Probengefäßträgertisches und 28a auf der Seite der Gerätebasis 1 gegenüber dieser abgestützten Probengefäßträgertisch 4, welcher in Aufsicht etwa rechteckig ist, so daß insgesamt vier Sätze von Stützstiften 30 und zugehörigen Stützpfannen jeweils im Eckenbereich des Probengefäßträgertisches 4 vorgesehen sind. Der Probengefäßträgertisch 4 ist zweckmäßig verhältnismäßig biegesteif um zwei zueinander senkrechte Biegeachsen durch auf der Unterseite vorgesehene Rippen oder dergleichen ausgebildet, hat jedoch bevorzugter Maßen eine vergleichsweise niedrigere Torsionssteifigkeit. Da aufgrund von Herstellungstoleranzen der Probengefäßträgertisch 4 gegenüber der Gerätebasis 1 bei einer vorgesehenen Abstützung an den vier Ecken praktisch nur auf drei Abstützpunkten statisch bestimmt ruhen kann, ist zur Vermeidung von Spielräumen und damit zur Vermeidung eines Ratterns während des Betriebes gemäß der Ausführungsform nach Fig. 15 vorgesehen, daß in einer unteren Ausnehmung der Gerätebasis 1 eine magnetische Rückschlußplatte 120 und auf dieser Permanentmagnetstücke 121 derart eingebettet oder eingesetzt sind, daß zu einem ferromagnetischen Bauteil, etwa einem unteren Polkernstück oder einem unteren Jochblech der Antriebsanordnung 7, soweit dieses untere Polkernstück oder untere Jochblech mechanisch fest mit dem Probengefäßträgertisch 4 verbunden ist, eine magnetische Kraftwirkung zustande kommt. Diese Kraftwirkung bewirkt, daß der Probengefäßträgertisch 4 in Richtung der Pfeile P von Fig. 15 nach abwärts gezogen wird und hierdurch der Probengefäßträgertisch 4 in ganz geringem Maße so weit verformt wird, daß sämtliche Stützpfannen 28 an den Köpfen der Stützstifte 30 anliegen.

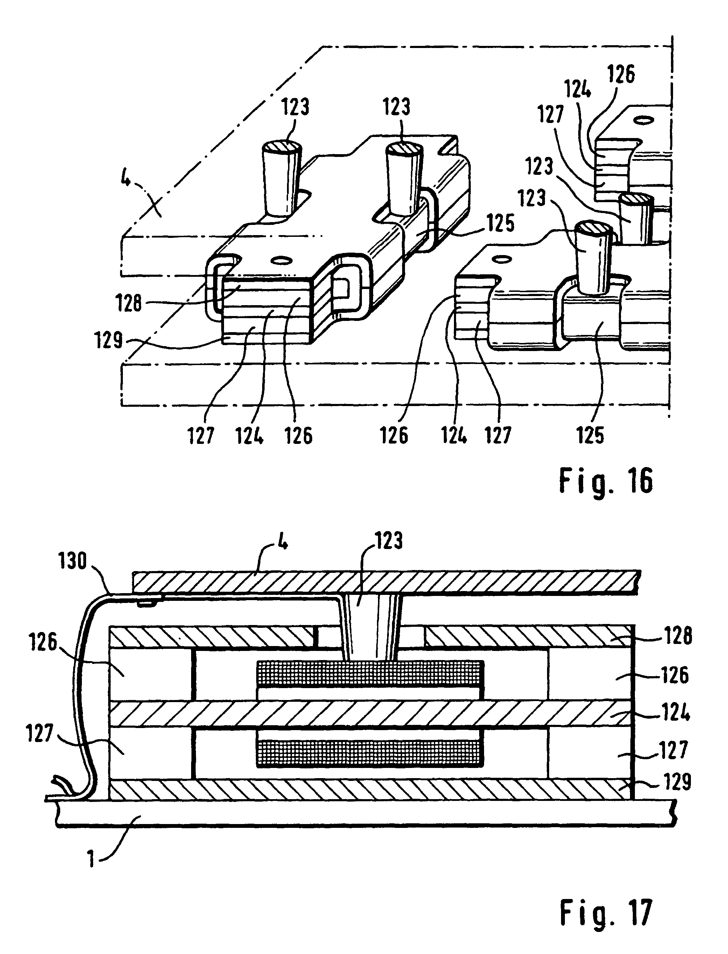

Fig. 16 zeigt nun in schematischer Darstellungsweise eine sehr zweckmäßige Ausführungsform eines Schüttelgerätes der angegebenen Art, bei der die Antriebsanordnung aus vier Antriebseinheiten gebildet ist, die sich mit ihrer längsten Abmessung längs der Ränder des Probengefäßträgertisches 4 bzw. der Gerätebasis 1 erstrecken, wobei die Spulensysteme feste Verbindung zum Probengefäßträgertisch 4 haben, wie durch die Befestigungsaugen 123 angedeutet ist, welche sich nach aufwärts erstrecken, während die Polkernstücke und zugehörige Jochbleche bzw. Rückschlußteile und die dazwischen liegenden Dauermagnetstücke an der Gerätebasis 1 verankert sind und mit ihrer vergleichsweise großen Masse nicht den Probengefäßträgertisch 4 belasten, so daß dieser zu Bewegungen mit hoher Rüttelfrequenz geeignet ist. Die in Fig. 16 mit 124 bezeichneten Polkerne sind in Richtung der benachbarten Ränder des Probengefäßträgertisches 4 bzw. der Gerätebasis 1 langgestreckt und reichen durch die Erregerspulen 125 hindurch. Mit Abstand von den jeweiligen Spulenstirnseiten sind in dem aus der jeweiligen Spulenseite hervorstehenden Bereich der Polkernstücke 127 an diese Permanentmagnetstücke 126 und 127 mit jeweils größerer Dicke als derjenigen einer Spulenseite oben und unten angesetzt und auf diese Permanentmagneten sind wiederum von oben und von unten Jochbleche 128 bzw. 129 aufgelegt, welche aufeinanderzu verlaufende Rückschlußteile in Bereichen der Spulenabmessung parallel zur Spulenachse aufweisen. Die Rückschlußteile und Bereiche der Jochbleche sind in der aus Fig. 16 ersichtlichen Weise ausgeschnitten, um die Befestigungsaugen 123 durchtreten zu lassen und der jeweiligen Spule 125 eine Beweglichkeit in Spulenachsenrichtung zu geben. Aus der Darstellung von Fig. 17 ist zu erkennen, daß bei der Ausführungsform nach den Fig. 16 und 17 mit einer Spule 125 nunmehr zwei Paare von Magnetstücken 126, 127 zusammenwirken, wodurch das Magnetfeld zwischen dem Polkernstück 124 und dem Jochblechen 128 und 129 noch intensiviert wird. Wie in Fig. 17 nur schematisch angedeutet, können die Jochbleche und das Polkernstück im Bereich der zwischengelegten Permanentmagnetstücke zusammengespannt und auch in diesem Bereich an der Gerätebasis 1 befestigt werden.

Die Stromzuleitung zu den Spulen 125 ist von einem an der Gerätebasis 1 angeordneten Anschluß aus über flexible Mehrfach-Bandleitungen 130 geführt, die zweckmäßig an den Seiten des Probengefäßträgertisches 4 und der Gerätebasis 1 in symmetrischer Anordnung vorgesehen sind, um die Beweglichkeit des Probengefäßträgertisches 4 gegenüber der Gerätebasis 1 nicht unsymmetrisch mit einer Vorspannung zu belasten. Parallel zu den flexiblen elektrischen Leitungen können auch flexible Kühlmittelleitungen oder flexible Heizmittelleitungen zwischen der Gerätebasis 1 und Kühlmittelkanälen oder Heizmittelkanälen des Probengefäßträgertisches 4 verlaufen.

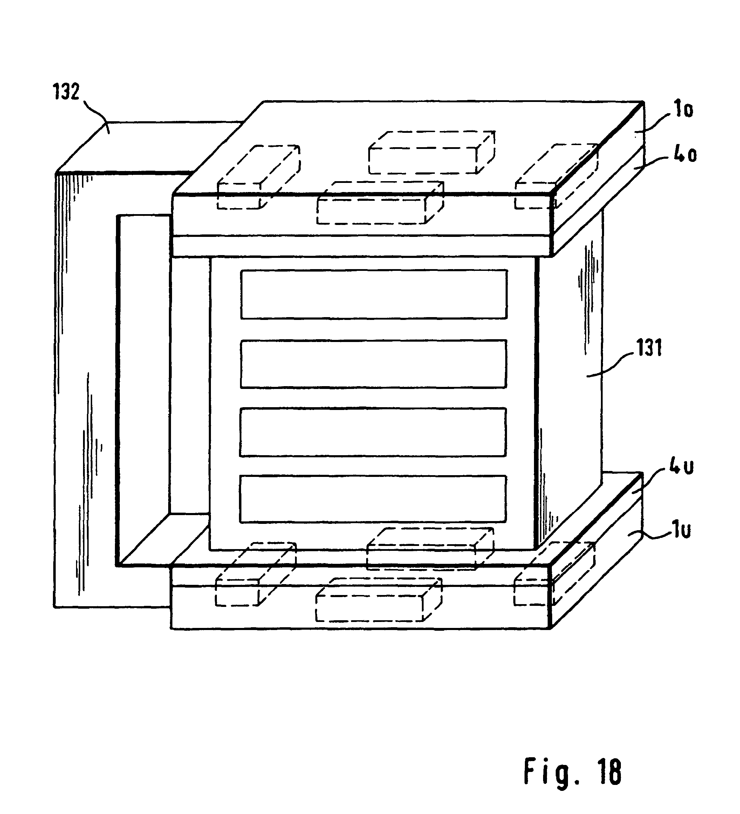

Schließlich zeigt die Ausführungsform nach Fig. 18 einen unteren Probengefäßträgertisch 4u, auf welchem ein Magazin 131 für die Aufnahme einer Reihe übereinander gestapelter Probengefäßträger befestigt ist. Auf dieses Magazin oder Regal 131 ist in fester Verbindung mit diesem ein oberer Probengefäßträgertisch 4o gesetzt, der spiegelbildlich zu dem unteren Probengefäßträgertisch 4u angeordnet und ausgebildet ist. Auf diesem gleichsam umgedrehten Probengefäßträgertisch 40 ist wiederum eine obere Gerätebasiseinheit 1o in spiegelbildlicher Ausbildung und Anordnung relativ zur unteren Gerätebasis gesetzt, wobei die untere Gerätebasis und die obere Gerätebasis durch einen starren Rahmen oder Bügel 132 fest verbunden sind. Untere Antriebsanordnungseinheiten und obere Antriebsanordnungseinheiten sind jeweils in Fig. 18 durch unterbrochene Linien angedeutet. Diese Antriebseinheiten sind jeweils zwischen der unteren Gerätebasis 1u und dem unteren Probengefäßträgertisch 4u wirksam und zwischen der oberen Gerätebasis 10 und dem oberen Probengefäßträgertisch 4o wirksam. Ein Synchronismus der beiden Antriebssysteme wird dadurch erreicht, daß die jeweiligen Antriebseinheiten im unteren Bereich und im oberen Bereich synchron zu einander erregt werden derart, daß das Magazin 131 bei den Schüttelbewegungen stets lotrecht gehalten ist. Bezüglich der Ausbildung der Antriebssysteme in der Ausführungsform nach Fig. 18 sei auf die zuvor beschriebenen Ausführungsformen verwiesen.

## Patentansprüche

1. Schüttelgerät für Probengefäße, insbesondere Mikrotiterplatten (6), mit einer Gerätebasis (1), mit einem gegenüber dieser für Schwingbewegungen in einer Horizontalebene abgestützten Probengefäßträgertisch (4) und mit einer zwischen der Gerätebasis (1) und dem Probengefäßträgertisch (4) wirksamen Antriebsanordnung (7) zur Erzeugung der Schwingbewegungen des Probengefäßträgertisches (4), wobei die Antriebsanordnung (7) mindestens zwei insbesondere im rechten Winkel zueinander in einer Horizontalebene ausgerichtete Solenoidantriebe aufweist, deren Erregerspulen (10, 11, 12, 13) mit einstellbar relativ zu einander phasenverschobenen Strömen beaufschlagbar sind, **dadurch gekennzeichnet, daß** die Erregerspulen (10, 11, 12, 13) gegenüber den jeweils zugehörigen Polkernen ein senkrecht zur Antriebsrichtung des betreffenden Solenoidantriebs orientiertes, der Antriebsrichtung des betreffenden anderen Solenoidantriebs entsprechendes gemäß dem maximalen Arbeitsschub des Probengefäßträgertisches (4) gegenüber der Gerätebasis (1) bemessenes Spiel haben und daß entweder die Erregerspulen (10-13) an der Gerätebasis (1) befestigt sind und die Polkerne (38, 39, 40) an dem Probengefäßträgertisch (4) befestigt sind oder die Erregerspulen (10-13) an dem Probengefäßträgertisch (4) befestigt sind und die Polkerne (38, 39, 40) an der Gerätebasis (1) befestigt sind.

2. Gerät nach Anspruch 1, **dadurch gekennzeichnet, daß** an der Gerätebasis (1) zwei um 90° um eine vertikale Mittelachse (8) versetzte Paare einander gegenüber liegender mit ihren Spulenöffnungen in Horizontalrichtung fluchtender Erregerspulen (10, 11; 12, 13) vorgesehen sind, deren Spulenöffnungsquerschnitte im wesentlichen flach rechteckig sind und daß an einem von dem Probengefäßträgertisch (4) im wesentlichen längs der genannten vertikalen Mittelachse (8) nach abwärts reichendem Anker (14) mindestens ein kreuzförmiges Polkernstück (39) befestigt ist, dessen Polkernschenkel in die Spulenöffnungen der Erregerspulen (10-13) hineinragen.

3. Gerät nach Anspruch 2, **dadurch gekennzeichnet, daß** unter und/oder über dem kreuzförmigen Polkernstück (39) an dem Anker (14) unter Zwischenlage eines bzw. je eines Ringes aus magnetisch aktivem Material ein bzw. je ein weiteres kreuzförmiges Polkernstück (38, 40) befestigt ist.

4. Gerät nach Anspruch 3, **dadurch gekennzeichnet, daß** der zwischengelegte Ring ein Permanentmagnetring ist, dessen eine Ringfläche als Nordpol und dessen andere Ringfläche als Südpol magnetisiert ist.

5. Gerät nach Anspruch 4, bei welchem über und unter dem kreuzförmigen Polkemstück (39) Permanentmagnetringe (42, 43) vorgesehen sind, **dadurch gekennzeichnet, daß** die einander naheliegenden Ringflächen der Permanentmagnetringe (42, 43) gleiche Polung haben.

6. Gerät nach einem der Ansprüche 1 bis 5, **dadurch gekennzeichnet, daß** zwischen der Gerätebasis (1) und dem Probengefäßträgertisch (4) mindestens an zwei in Horizontalrichtung beabstandeten Stellen mit Bezug auf die horizontalen Schüttelbewegungen Hubbegrenzungseinrichtungen (34, 35, 36) vorgesehen sind, welche jeweils eine in eine zylindrische Anschlagkammer (34) ragende, drehbare Anschlagrolle umfassen, deren Außendurchmesser um den maximalen horizontalen Arbeitshub kleiner als der Innendurchmesser der zylindrischen Anschlagkammer ist.

7. Gerät nach einem der Ansprüche 1 bis 6, **dadurch gekennzeichnet, daß** der Probengefäßträgertisch (4) für die Schwingbewegungen in einer Horizontalebene an um 90° in einer Horizontalebene gegeneinander versetzten Gelenkplattenpaaren oder Blattfederpaaren abgestützt ist, wobei die aufeinander zu gerichteten Enden des einen Paares von Blattfedern bzw. von Gelenkplatten und des anderen Paares von Blattfedern bzw. Gelenkplatten gelenkige Verbindung haben.

8. Gerät nach einem der Ansprüche 1 bis 6, **dadurch gekennzeichnet, daß** der Probengefäßträgertisch (4) gegenüber der Gerätebasis an von dieser aufragenden, allseitig gelenkig verschwenkbaren oder allseitig federnd verschwenkbaren Stützen (30) für die Schwingbewegungen in einer Horizontalebene abgestützt ist.

9. Schüttelgerät nach einem der Ansprüche 1 bis 8, **dadurch gekennzeichnet, daß** die Erregerspulen mit Strömen einstellbarer Frequenz und einstellbarer gegenseitiger Phase und mit einstellbarer Amplitude derart beaufschlagbar sind, daß die Schütttelbewegungen des Probengefäßträgertisches (4) eine kreisförmige oder elliptische Bahn beliebiger Ausrichtung beschreiben oder eine hin- und hergehende Bewegung beliebiger Richtung sind.

10. Schüttelgerät nach einem der Ansprüche 1 bis 9, **dadurch gekennzeichnet, daß** eine Ruhestellung des Probengefäßträgertisches (4) durch an diesem angreifende Federmittel festgelegt ist.

11. Schüttelgerät nach einem der Ansprüche 1 bis 9, **dadurch gekennzeichnet, daß** eine Ruhestellung des Probengefäßträgertisches (4) gegenüber der Gerätebasis durch eine bestimmte Konstantstromansteuerung der Erregerspulen festgelegt ist.

12. Schüttelgerät nach einem der Ansprüche 1 bis 10, **dadurch gekennzeichnet, daß** es in einer Anordnung von insgesamt vier gleichen solchen Schüttelgeräten eine solche Strombeaufschlagung seiner Erregerspulen (10-13) erfährt, daß in der Anordnung von Schüttelgeräten einander diagonal gegenüberliegende Probengefäßträgertische (4) gleichsinnige Schüttelbewegungen ausführen, während einander benachbarte Probengefäßträgertische (4) gegensinnige Rüttelbewegungen ausführen.

13. Gerät nach einem der Ansprüche 1 bis 11, **dadurch gekennzeichnet, daß** der Probengefäßträgertisch (4) und eine ihn abstützende Gerätebasis oder ihn abstützende Gerätebasiseinheiten (1) rahmenartig ausgebildet sind, derart, daß ein von Probengefäßen einer Mikrotiterplatte (6) eingenommener Bereich für optische Durchlicht-Untersuchungsverfahren oder für Magnetfeldabscheidungen oberhalb und unterhalb der Mikrotiterplatte (6) freigehalten ist.

14. Schüttelgerät nach einem der Ansprüche 1 bis 12, **dadurch gekennzeichnet, daß** die Gerätebasis (1) insbesondere mittels eines durch Kanäle (50) der Gerätenbasis (1) geleitete Heizmittel oder Kühlmittel beheizbar bzw. kühlbar ist und daß von der Gerätebasis (1) über Durchbrüche (52) des Probengefäßträgertisches (4) Wärmetausch- und Konvektionsförderstifte (51) aufragen, die bis in den Bereich von Zwischenräumen zwischen den Probengefäßen aufragen.

15. Schüttelgerät nach einen der Ansprüche 1 bis 14, **dadurch gekennzeichnet, daß** die Polkerne (124) durch die Erregerspulen (125) hindurchreichen, daß, mit Abstand von den jeweiligen Spulenstimseiten, in dem aus der jeweiligen Spulenseite hervorstehenden Bereich der Polstücke an diese Permanentmagnetstücke (126, 127) mit jeweils größerer Dicke als derjenigen einer Spulenseite oben und unten aufgesetzt sind und auf diese Permanentmagneten wiederum von oben und von unten Jochbleche (128, 129) aufgelegt sind, wobei die Magnetisierung der Permanentmagnetstücke so gewählt ist, daß jeweils ein intensives Magnetfeld in den Spalträumen von den Polkernen auf die Jochbleche hin bzw. umgekehrt, herrscht.

16. Gerät nach einem der Ansprüche 1 bis 15, **dadurch gekennzeichnet, daß** obere und untere Polkernstücke bzw. Jochbleche (128, 129) aufeinanderzu verlaufende Rückschlußteile (115) mindestens in Bereichen der Spulenabmessung parallel zur Spulenachse aufweisen.

17. Gerät nach einem der Ansprüche 1 bis 9 oder 12 bis 14 und Anspruch 10, **dadurch gekennzeichnet, daß** die Federmittel von mehreren, von der Gerätebasis (1) aufragenden, durch umschlingende Schraubenfedern (105) nach abwärts belasteten Zentrierstiften (103) gebildet sind, die mit einem Tellerfuß (102) gegen einen Senkbohrungsrand (101) in Mittelstellung stabil abgestützt und mit einem Zentrierkopf (106) in eine diese im wesentlichen spielfrei nur am Umfang berührende Zentrierbohrung (107) auf der Unterseite des Probengefäßträgertisches (4) ragen.

18. Gerät nach einem der Ansprüche 1 bis 9 oder 12 bis 14 und Anspruch 10, **dadurch gekennzeichnet, daß** die Federmittel von mehreren Zentrierkegelstiften (108) gebildet sind, die von umschlingenden Schraubenfedern (110) in Kegelausnehmungen (111) auf der Unterseite des Probengefäßträgertisches (4) gedrückt werden und von Elektromagnetantrieben (112) gleichzeitig mit der Einschaltung der Antriebsanordnung (7) gegen die Kräfte der Schraubenfedern aus den Kegelausnehmungen zurückgezogen werden.

19. Gerät nach einen der Ansprüche 1 bis 18, **dadurch gekennzeichnet, daß** der Probengefäßträgertisch (4) mindestens einen Satz von zwei einander diagonal gegenüberliegenden Haltewinkeln (113) zum Fixieren von Probengefäßplatten (6) auf der Oberfläche des Probengefäßträgertisches (4) aufweist, wobei die Innenflanken der Haltewinkel federnde Teile zum Erfassen des jeweils benachbarten Randbereiches der Probengefäßträgerplatte aufweisen.

20. Gerät nach Anspruch 19, **dadurch gekennzeichnet, daß** die Haltewinkel (113) aus zähelastischem Werkstoff, insbesondere Kunststoff, gefertigt sind und in einem jeweiligen Innenraum der Haltewinkelschenkel eingesetzte Betätigungsbügel (114) aufweisen, welche mittels in die Haltewinkelschenkel eingeschraubter Justierschrauben (118) derart verformbar sind, daß sie mit einem Bügelansatz (117) die benachbarte Haltewinkelschenkelwand als federndes Teil in Richtung auf den Rand eines einzusetzenden Probengefäßträgers einstellbar nach einwärts verformen.

21. Gerät nach einem der Ansprüche 1 bis 20, **gekennzeichnet durch** ein an der Gerätebasis (1) angeordnetes Dauermagnetsystem (121), welches mit ferromagnetischen Ankerteilen der Antriebsanordnung, welche von dem Probengefäßträgertisch (4) nach abwärts ragen, im Sinne einer Vorspannung des Probengefäßträgertisches auf die Gerätebasis (1) hin **durch** die magnetische Anziehung zusammenwirken.

22. Gerät nach Anspruch 21, **dadurch gekennzeichnet, daß** der Probengefäßträgertisch (4) durch Rippen biegesteif, jedoch nur in geringerem Maße torsionssteif, ausgebildet ist, derart, daß ein Spiel zwischen einzelnen Abstützmitteln der Gerätebasis (1) einerseits und Gegenflächen des Probengefäßträgertisches (4) andererseits beseitigt wird.

23. Gerät nach Anspruch 1, bei welchem die Erregerspulen (125) an dem Probengefüßträgertisch (4) befestigt sind und die Polkerne sowie gegebenenfalls mit diesen verbundene Permanentmagnetstücke und Jochbleche an der Gerätebasis (1) befestigt sind, **gekennzeichnet durch** flexible Leiterbrücken (130) zwischen dem Probengefäßträgertisch (4) und der Gerätebasis (1), vorzugsweise in symmetrischer Anordnung, zur Zuleitung der Erregerströme von einem Anschluß an der Gerätebasis zu den Erregerspulen an dem Probengefäßträgertisch.

24. Gerät nach Anspruch 23, **dadurch gekennzeichnet, daß** parallel zu den flexiblen Leiterbrücken flexible Heizmittelleitungen oder Kühlmittelleitungen zu Heizkanälen bzw. Kühlkanälen des Probengefäßträgertisches geführt sind.

25. Gerät nach einem der Ansprüche 1 bis 24, **dadurch gekennzeichnet, daß** der Probengefäßträgertisch ein Magazin (131) für Probengefäßträger trägt, auf welches ein oberer Probengefäßträgertisch in spiegelbildlicher Ausbildung und Anordnung mit Bezug auf eine horizontale Mittelebene des Gerätes aufgesetzt ist, welcher wiederum mit einer oberen Gerätebasiseinheit in spiegelbildlicher Ausbildung und Anordnung wie die untere Gerätebasis zusammen wirkt, wobei die untere und obere Gerätebasis durch einen starren Rahmen (132) fest verbunden sind und die jeweiligen Antriebsanordnungen zwischen unterer Gerätebasis und unterem Probengefäßträgertisch und zwischen oberer Gerätebasiseinheit und oberem Probengefäßträgertisch synchron erregt werden.

## Claims

1. Shaking apparatus for sample vessels, in particular microtitre plates (6), having an apparatus base (1), having a sample vessel carrier table (4) which is opposite the latter and supported for oscillation movements in a horizontal plane and having an actuation arrangement (7) which is effective between the apparatus base (1) and the sample vessel carrier table (4) for producing oscillation movements of the sample vessel carrier table (4), the actuation arrangement (7) having at least two solenoid actuators which are aligned in particular at right angles to each other in a horizontal plane and the excitation coils (10, 11, 12, 13) of which can be supplied with currents which are adjustably phase-shifted relative to each other, **characterised in that** the excitation coils (10, 11, 12, 13) have, relative to the respectively associated pole cores, a clearance which is orientated perpendicularly to the actuation direction of the relevant solenoid actuator, corresponds to the actuation direction of the relevant other solenoid actuator and is dimensioned according to the maximum operating thrust of the sample vessel carrier table (4) relative to the apparatus base (1), and **in that** either the excitation coils (10 - 13) are mounted on the apparatus base (1) and the pole cores (38, 39, 40) are mounted on the sample vessel carrier table (4) or the the excitation coils (10 - 13) are mounted on the sample vessel carrier table (4) and the pole cores (38, 39, 40) are mounted on the apparatus base (1).

2. Apparatus according to claim 1, **characterised in that** two pairs of excitation coils (10, 11; 12, 13) are provided on the apparatus base (1), which are offset by 90° about a vertical central axis (8) and situated opposite each other with their coil openings aligned in the horizontal direction and the coil opening cross-sections of which excitation coils are substantially rectangular in a planar manner, and **in that** at least one cruciate pole core piece (39) is mounted on an armature (14) which extends downwardly from the sample vessel carrier table (4) substantially along said vertical central axis (8), the pole core legs of which pole core piece project into the coil openings of the excitation coils (10, 13).

3. Apparatus according to claim 2, **characterised in that** one or respectively one further cruciate pole core piece (38, 40) is mounted below and/or above the cruciate pole core piece (39) on the armature (14), with intermediate layering of one or respectively one ring made of magnetically active material.

4. Apparatus according to claim 3, **characterised in that** the intermediately layered ring is a permanent magnet ring, one ring face of which is magnetised as a north pole and the other ring face of which is magnetised as a south pole.

5. Apparatus according to claim 4, in which permanent magnet rings (42, 43) are provided above and below the cruciate pole core piece (39), **characterised in that** the ring faces, which are near each other, of the permanent magnet rings (42, 43) have the same magnetic polarity.

6. Apparatus according to one of the claims 1 to 5, **characterised in that** stroke-delimiting devices (34, 35, 36) are provided between the apparatus base (1) and the sample vessel carrier table (4) at at least two positions at a spacing in the horizontal direction with respect to the horizontal shaking movements, which stroke-delimiting devices include respectively one rotatable stop roller which protrudes into a cylindrical stop chamber (34), the external diameter of said stop roller being smaller than the internal diameter of the cylindrical stop chamber by the maximum horizontal operating stroke.

7. Apparatus according to one of the claims 1 to 6, **characterised in that** the sample vessel carrier table (4) is supported in a horizontal plane for the oscillation movements on articulated plate pairs or leaf spring pairs which are offset by 90° in a horizontal plane relative to each other, the ends of the one pair of leaf springs or of articulated plates and of the other pair of leaf springs or articulated plates which are directed towards each other having an articulated connection.

8. Apparatus according to one of the claims 1 to 6, **characterised in that** the sample vessel carrier table (4) is supported relative to the apparatus base on supports (30), which protrude up from the latter and can pivot on all sides in an articulated manner or can pivot on all sides in a resilient manner, for the oscillation movements in a horizontal plane.

9. Shaking apparatus according to one of the claims 1 to 8, **characterised in that** the excitation coils can be supplied with currents of adjustable frequency and adjustable mutual phase and with adjustable amplitude in such a manner that the shaking movements of the sample vessel carrier table (4) describe a circular or elliptical path of arbitrary orientation or a to-and-fro movement of arbitrary direction.

10. Shaking apparatus according to one of the claims 1 to 9, **characterised in that** an inoperative position of the sample vessel carrier table (4) is established by spring means which engage on the latter.

11. Shaking apparatus according to one of the claims 1 to 9, **characterised in that** an inoperative position of the sample vessel carrier table (4) relative to the apparatus base is established by menus of a specific constant current control of the excitation coils.

12. Shaking apparatus according to one of the claims 1 to 10, **characterised in that**, in an arrangement of in total four identical such shaking apparatuses, it experiences such a current supply of its excitation coils (10 - 13) that, in the arrangement of shaking apparatuses, the sample vessel carrier tables (4), which are situated diagonally opposite each other, perform shaking movements in the same direction, whilst sample vessel carrier tables (4), which are adjacent to each other, perform shaking movements in opposite directions.

13. Apparatus according to one of the claims 1 to 11, **characterised in that** the sample vessel carrier table (4) and an apparatus base supporting it or apparatus base units (1) supporting it have a frame-like configuration, such that a region occupied by sample vessels of a microtitre plate (6) is kept free, above and below the microtitre plate (6), for optical transmitted light investigation processes or for magnetic field separations.

14. Shaking apparatus according to one of the claims 1 to 12, **characterised in that** the apparatus base (1) can be heated or cooled, in particular by means of a heating medium or cooling medium which is conducted through channels (50) of the apparatus base (1), and **in that** heat exchange- and convection promotion pins (51) protrude up from the apparatus base (1) through through-openings (52) of the sample vessel carrier table (4), which pins protrude up to into the region of intermediate spaces between the sample vessels.

15. Shaking apparatus according to one of the claims 1 to 14, **characterised in that** the pole cores (124) extend through the excitation coils (125), **in that**, at a spacing from the respective coil end-sides, permanent magnet pieces (126, 127) are placed above and below, in the region of the pole pieces projecting from the respective coil side to the latter, with respectively greater thickness than that of a coil side, and yoke sheets (128, 129) are placed upon these permanent magnets in turn from above and from below, the magnetisation of the permanent magnet pieces being chosen such that an intensive magnetic field prevails respectively in the gap spaces from the pole cores towards the yoke sheets or vice versa.

16. Apparatus according to one of the claims 1 to 15, **characterised in that** upper and lower pole core pieces or yoke sheets (128, 129) have rear closing parts (115), which extend towards each other, at least in regions of the coil dimension parallel to the coil axis.

17. Apparatus according to one of the claims 1 to 9 or 12 to 14 and claim 10, **characterised in that** the spring means are formed from a plurality of centring pins (103) which protrude up from the apparatus base (1) and are loaded downwardly by means of encircling helical springs (105), which centring pins are supported in a stable manner by a plate foot (102) against a sunken boring edge (101) in the central position, and protrude with a centring head (106) into a centring boring (107), which is in contact with said centring pins only at the circumference in a substantially clearance-free manner on the underside of the sample vessel carrier table (4).

18. Apparatus according to one of the claims 1 to 9 or 12 to 14 and claim 10, **characterised in that** the spring means are formed from a plurality of centring conical pins (108), which are pressed by the encircling helical springs (110) into conical recesses (111) on the underside of the sample vessel carrier table (4) and are withdrawn from the conical recesses against the forces of the helical springs by electromagnet actuators (112) simultaneously with switching on the actuation arrangement (7).

19. Apparatus according to one of the claims 1 to 18, **characterised in that** the sample vessel carrier table (4) has at least one set of two holding angles (113), which are situated diagonally opposite each other, for fixing sample vessel plates (6) on the surface of the sample vessel carrier table (4), the internal sides of the holding angles having resilient parts for gripping the respectively adjacent edge region of the sample vessel carrier plate.

20. Apparatus according to claim 19, **characterised in that** the holding angles (113) are manufactured from a tough-resilient material, in particular plastic material, and have actuation hoops (114) inserted in one respective interior space of the holding angle legs, which actuation hoops can be deformed by means of adjustment screws (118) which are screwed into the holding angle legs such that, with a hoop extension (117), they deform the adjacent holding angle leg wall as resilient element inwardly in an adjustable manner in the direction towards the edge of a sample container carrier which is to be inserted.

21. Apparatus according to one of the claims 1 to 20, **characterised by** a permanent magnet system (121) which is disposed on the apparatus base (1) and cooperates with ferromagnetic armature parts of the actuation arrangement, which protrude downwardly from the sample vessel carrier table (4), in the sense of a pretensioning of the sample vessel carrier table towards the apparatus base (1) by means of the magnetic attraction.

22. Apparatus according to claim 21, **characterised in that** the sample vessel carrier table (4) is configured resistant to bending by means of ribs but only resistant to torsion to a slight extent, such that a clearance between individual support means of the apparatus base (1) on the one hand and counter-faces of the sample vessel carrier table (4) on the other hand is eliminated.

23. Apparatus according to claim 1, in which the excitation coils (125) are mounted on the sample vessel carrier table (4) and the pole cores and permanent magnet pieces which if necessary are connected thereto and yoke sheets are mounted on the apparatus base (1), **characterised by** flexible conductor bridges (130) between the sample vessel carrier table (4) and the apparatus base (1), preferably in a symmetrical arrangement, in order to supply the excitation currents from a connection on the apparatus base to the excitation coils on the sample vessel carrier table.

24. Apparatus according to claim 23, **characterised in that** flexible heating medium lines or cooling medium lines are guided, parallel to the flexible conductor bridges, to heating channels or cooling channels of the sample vessel carrier table.

25. Apparatus according to one of the claims 1 to 24, **characterised in that** the sample vessel carrier table bears a magazine (131) for sample vessel carriers, on which an upper sample vessel carrier table is placed in mirror-inverted configuration and arrangement with respect to a horizontal central plane of the apparatus, which in turn cooperates with an upper apparatus base unit in mirror-inverted configuration and arrangement like the lower apparatus base, the lower and upper apparatus base being securely connected by means of a rigid frame (132) and the respective actuation arrangements between lower apparatus base and lower sample vessel carrier table and between upper apparatus base unit and upper sample vessel carrier table being excited synchronously.

## Revendications

1. Appareil agitateur pour récipients d'échantillonnage, notamment plaques de microtitrage (6), comprenant une base d'appareil (1) avec une table de support de récipients d'échantillonnage (4) soutenue dans un plan horizontal par rapport à celle-ci pour des mouvements d'oscillation, et comprenant un ensemble d'entraînement (7) efficace entre la base d'appareil (1) et la table de support de récipients d'échantillonnage (4) pour générer les mouvements d'oscillation de la table de support de récipients d'échantillonnage (4), l'ensemble d'entraînement (7) présentant au moins deux entraînements à solénoïde orientés notamment à l'angle droit l'un par rapport à l'autre dans un plan horizontal, dont les bobines excitatrices (10, 11, 12, 13) peuvent être alimentées en courants déphasés les uns par rapport aux autres de manière réglable, **caractérisé en ce que** les bobines excitatrices (10, 11, 12, 13) ont un jeu par rapport aux noyaux polaires respectivement associés, orienté verticalement au sens d'entraînement de l'entraînement à solénoïde concerné, correspondant au sens d'entraînement de l'autre entraînement à solénoïde concerné, dimensionné selon la poussée de travail maximale de la table de support de récipients d'échantillonnage (4) par rapport à la base d'appareil (1), et **en ce que** soit les bobines excitatrices (10-13) sont fixées à la base d'appareil (1) et les noyaux polaires (38, 39, 40) à la table de support de récipients d'échantillonnage (4), soit les bobines excitatrices (10-13) sont fixées à la table de support de récipients d'échantillonnage (4) et les noyaux polaires (38, 39, 40) à la base d'appareil (1).

2. Appareil selon la revendication 1, **caractérisé en ce qu'**à la base d'appareil (1) deux paires de bobines excitatrices (10, 11 ; 12, 13) décalées de 90° autour d'un axe médian vertical(8) sont prévues l'une en regard de l'autre alignées par leurs ouvertures de bobine dans la direction horizontale, dont les sections transversales d'ouvertures de bobine sont pour l'essentiel rectangulaires plates, et **en ce qu'**à un induit (14) s'étendant depuis la table de support de récipients d'échantillonnage (4) pour l'essentiel le long de l'axe médian vertical (8) vers le bas, au moins un élément de noyau polaire (39) est fixé, dont les branches de noyau polaire saillissent dans les ouvertures de bobine des bobines excitatrices (10-13).

3. Appareil selon la revendication 2, **caractérisé en ce qu'**en dessous et/ou au-dessus de l'élément de noyau polaire (39) en forme de croix, un ou tout autre élément de noyau polaire (38, 40) est fixé à l'induit (14) en intercalant une ou toute bague en matériau magnétiquement actif.

4. Appareil selon la revendication 3, **caractérisé en ce que** la bague intercalée est une bague à aimantation permanente dont l'une surface de bague est aimantée comme pôle nord et dont l'autre surface de bague est aimantée comme pôle sud.

5. Appareil selon la revendication 4, dans lequel au-dessus et en dessous de l'élément de noyau polaire (39) des bagues à aimantation permanente (42, 43) sont prévues, **caractérisé en ce que** les surfaces de bague des bagues à aimantation permanente (42, 43) proches les unes des autres présentent la même polarité.

6. Appareil selon l'une quelconque des revendication 1 à 5, **caractérisé en ce qu'**entre la base d'appareil (1) et la table de support de récipients d'échantillonnage (4), au moins à deux endroits distancés dans la direction horizontale par rapport aux mouvements d'agitation horizontaux, des installations de limitation de course (34, 35, 36) sont prévues, qui comportent respectivement un galet de butée rotatif saillant dans une chambre de butée cylindrique (34) et dont le diamètre extérieur est plus petit de la course de travail horizontale maximale que le diamètre intérieur de la chambre de butée cylindrique.

7. Appareil selon l'une quelconque des revendications 1 à 6, **caractérisé en ce que** la table de support de récipients d'échantillonnage (4) est soutenue pour les mouvements d'oscillation dans un plan horizontal par des paires de plaques articulées ou paires de ressorts à lames décalées de 90° les unes par rapport aux autres dans un plan horizontal, les extrémités orientées les unes vers les autres d'une paire de ressorts à lames ou de plaques articulées et de l'autre paire de ressorts à lames ou de plaques articulées présentant une liaison articulée.

8. Appareil selon l'une quelconque des revendications 1 à 6, **caractérisé en ce que** la table de support de récipients d'échantillonnage (4) est soutenue par rapport à la base d'appareil par des appuis (30) saillant de celle-ci vers le haut, pivotant de façon articulée dans tous les sens ou pivotant de façon élastique dans tous les sens pour les mouvements d'oscillation dans un plan horizontal.

9. Appareil agitateur selon l'une quelconque des revendications 1 à 8, **caractérisé en ce que** les bobines excitatrices peuvent être alimentées en courants d'une fréquence réglable et d'une phase réciproque réglable et d'une amplitude réglable de telle sorte que les mouvements d'agitation de la table de support de récipients d'échantillonnage (4) décrivent une trajectoire.circulaire ou elliptique d'une orientation quelconque ou sont un mouvement de va-et-vient d'une direction quelconque.

10. Appareil agitateur selon l'une quelconque des revendications 1 à 9, **caractérisé en ce qu'**une position de repos de la table de support de récipients d'échantillonnage (4) est définie par des moyens élastiques intervenant sur celle-ci.

11. Appareil agitateur selon l'une quelconque des revendications 1 à 9, **caractérisé en ce qu'**une position de repos de la table de support de récipients d'échantillonnage (4) par rapport à la base d'appareil est définie par une commande à courant constant déterminée des bobines excitatrices.

12. Appareil agitateur selon l'une quelconque des revendications 1 à 10, **caractérisé en ce que** dans un ensemble d'un total de quatre desdits appareils agitateurs identiques, il subit une telle alimentation en courant de ses bobines excitatrices (10-13) que des tables de support de récipients d'échantillonnage (4) disposées de façon diagonalement opposées dans l'ensemble d'appareils agitateurs exécutent des mouvements d'agitation dans le même sens, tandis que des tables de support de récipients d'échantillonnage (4) voisines les unes des autres exécutent des mouvements d'agitation à contresens.

13. Appareil selon l'une quelconque des revendications 1 à 11, **caractérisé en ce que** la table de support de récipients d'échantillonnage (4) et une base d'appareil ou des unités de bases d'appareil (1) la soutenant présentent la forme d'un cadre, de telle sorte qu'une zone occupée par des récipients d'échantillonnage d'une plaque de microtitrage (6) soit réservée au-dessus et en dessous de la plaque de microtitrage (6) pour des procédés d'examen par transparence optique ou pour des séparations de champs magnétiques.

14. Appareil agitateur selon l'une quelconque des revendications 1 à 12, **caractérisé en ce que** la base d'appareil (1) peut être chauffée ou refroidie notamment au moyen d'un agent de chauffage ou d'un agent de refroidissement conduit à travers des canaux (50) de la base d'appareil, et **en ce que** de la base d'appareil (1) des tiges d'échange thermique ou de convection (51) saillissent vers le haut par l'intermédiaire de passages (52) de la table de support de récipients d'échantillonnage (4), qui s'étendent jusqu'à la zone d'espaces intermédiaires entre les récipients d'échantillonnage.

15. Appareil agitateur selon l'une quelconque des revendications 1 à 14, **caractérisé en ce que** les noyaux polaires (124) passent à travers les bobines excitatrices (125), **en ce que**, à distance des faces frontales de bobines respectives, dans la zone des éléments polaires saillant de la face de bobine respective, des éléments à aimantation permanente (126, 127) d'une épaisseur respectivement supérieure à celle d'une face de bobine sont rapportés en haut et en bas, et sur ces aimants permanents des tôles de culasse (128, 129) sont rapportées également par le haut et par le bas, l'aimantation des éléments à aimantation permanente étant choisie de telle sorte qu'il règne respectivement un champ magnétique intensif dans les interstices depuis les noyaux polaires vers les tôles de culasse ou inversement.

16. Appareil selon l'une quelconque des revendications 1 à 15, **caractérisé en ce que** des éléments de noyau polaire ou des tôles de culasse (128, 129) supérieurs et inférieurs présentent des éléments d'extrémité arrière (115) s'étendant les uns en direction des autres, du moins dans des plages de la dimension des bobines parallèles à l'axe de bobine.

17. Appareil selon l'une quelconque des revendications 1 à 9 ou 12 à 14 et la revendication 10, **caractérisé en ce que** les moyens élastiques sont formés par plusieurs tiges de centrage (103) saillant de la base d'appareil (1) vers le haut sollicitées vers le bas par des ressorts hélicoïdaux (105) enroulants, qui par un plateaux (102) sont soutenues de façon stable en position centrale contre un bord d'alésage (101) et saillissent par une tête de centrage (106) dans un perçage de centrage (107) ne touchant celui-ci qu'au niveau de la circonférence de façon pour l'essentiel sans jeu à la face inférieure de la table de support de récipients d'échantillonnage (4).

18. Appareil selon l'une quelconque des revendications 1 à 9 ou 12 à 14 et la revendication 10, **caractérisé en ce que** les moyens élastiques sont formés par plusieurs tiges de centrage coniques (108), qui par des ressorts hélicoïdaux (110) sont poussées dans des évidements coniques (111) à la face inférieure de la table de support de récipients d'échantillonnage (4) et retirées des évidements coniques contre les forces des ressorts hélicoïdaux par des entraînements électromagnétiques (112) au moment de l'activation de l'ensemble d'entraînement (7).

19. Appareil selon l'une quelconque des revendications 1 à 18, **caractérisé en ce que** la table de support de récipients d'échantillonnage (4) présente au moins un jeu de deux cornières de maintien (113) situées diagonalement opposées l'une à l'autre pour fixer des plaques de récipients d'échantillonnage (6) à la surface de la table de support de récipients d'échantillonnage (4), les flancs intérieurs des cornières de maintien présentant des éléments élastiques pour saisir la zone périphérique respectivement voisine de la plaque de support de récipients d'échantillonnage.

20. Appareil selon la revendication 19, **caractérisé en ce que** les cornières de maintien (113) sont réalisées à partir d'un matériau viscoplastique, notamment en matière plastique et présentent, insérées dans un espace intérieur respectif des branches de cornière de maintien, des étriers d'actionnement (114) qui au moyen de vis d'ajustage (118) pouvant être vissées dans les branches de cornière de maintien sont déformables de telle sorte que par un appendice d'étrier (117) ils déforment vers l'intérieur de façon réglable la paroi de branche de cornière de maintien voisine en tant que pièce déformable en direction du bord d'un support de récipient d'échantillonnage.

21. Appareil selon l'une quelconque des revendications 1 à 20, **caractérisé par** un système d'aimants permanents (121) disposé au niveau de la base d'appareil (1), qui coopère par attraction magnétique avec des éléments d'induit ferromagnétiques de l'ensemble d'entraînement, qui saillissent de la table de support de récipients d'échantillonnage (4) vers le bas, dans le sens d'une précontrainte de la table de support de récipients d'échantillonnage (4) sur la base d'appareil (1).

22. Appareil selon la revendication 21, **caractérisé en ce que** la table de support de récipients d'échantillonnage (4) est configurée de façon résistante à la flexion mais moins résistante à la torsion, de telle sorte qu'un jeu entre différents moyens de soutien de la base d'appareil (1) d'une part et des contre-surfaces de la table de support de récipients d'échantillonnage (4) d'autre part est supprimé.

23. Appareil selon la revendication 1, dans lequel les bobines excitatrices (125) sont fixées à la table de support de récipients d'échantillonnage (4) et les noyaux polaires ainsi des éléments à aimantation permanente le cas échéant reliés à ceux-ci et des tôles de culasse sont fixés à la base d'appareil (1), **caractérisé par** des ponts conducteurs (130) flexibles entre la table de support de récipients d'échantillonnage (4) et la base d'appareil (1), de préférence selon une disposition symétrique, pour conduire les courants d'excitation depuis un raccord à la base d'appareil vers les bobines excitatrices sur la table de support de récipients d'échantillonnage.

24. Appareil selon la revendication 23, **caractérisé en ce que** parallèlement aux ponts conducteurs flexibles des conduites d'agent de chauffage ou des conduites d'agent de refroidissement s'étendent vers des canaux de chauffage ou des canaux de refroidissement de la table de support de récipients d'échantillonnage.

25. Appareil selon l'une quelconque des revendications 1 à 24, **caractérisé en ce que** la table de support de récipients d'échantillonnage porte un magasin (131) pour des supports de récipients d'échantillonnage, sur lequel est placée une table de support de récipients d'échantillonnage supérieure sous une forme et selon une disposition réfléchies par rapport à un plan médian horizontal de l'appareil, qui coopère avec une unité de base d'appareil supérieure sous une forme et selon une disposition réfléchies comme la base d'appareil inférieure, les bases d'appareil inférieure et supérieure étant reliées à demeure par un cadre rigide (132) et les ensembles d'entraînement respectifs entre la base d'appareil inférieure et la table de support de récipients d'échantillonnage inférieure et entre l'unité de base d'appareil supérieure et la table de support de récipients d'échantillonnage supérieure étant excités de manière synchronisée.
